# EUROPEAN PATENT APPLICATION

(11) **EP 1 918 670 A1**
(43) Date of publication of application: **07.05.2008**
(21) Application number: 07380293.6
(22) Date of filing: 26.10.2007
(51) Int. Cl.: F28F 19/00, F28D 9/00

(54) **Machine for treating foods and fluids in general and process for the treatment thereof**

(30) Priority: 26.10.2006 ES 200602733
(71) Applicant: HRS Spiratube S.L., 30009 Murcia (ES)
(72) Inventor: Pagan Duran, Jesús, 30009 Murcia (ES)
(74) Representative: Carpintero Lopez, Francisco

(57) **Abstract**

The treatment machine of the invention consists of a casing inside which there are walls that are thermally conditioned to provide heat or cold and between these walls there are blades attached to a central shaft that receives movement from an external gear motor. The thermally conditioned walls do not reach the bottom of the casing and the free lower area is designed for the product to pass therethrough and is only interrupted by the movement of the blades that collects the product, passes it over the thermally conditioned walls and deposits it once again.

The machine and process are suitable for frying, cooking, dehydrating, crystallising, evaporating and/or toasting food products and fluids in general.

## Description

### OBJECT OF THE INVENTION

The object of the invention relates to a scraped surface heat exchanger for treating fluids, regardless of their properties and solids content in suspension, which includes foods and other products in heating, cooling, evaporation, and drying processes, with particular emphasis on the cooking of food products for catering and suchlike, in frying and cooking processes, and sterilisation and aseptic cooling for their subsequent packaging in bags or other aseptic containers in other sectors such as the evaporation and drying of distillation residue in bioalcohol plants or the production of liquid ice.

The machine can work continuously or intermittently. Depending on the application, the unit can be pressurised to work under pressure on the product side.

This invention makes it possible to incorporate a very large scraped surface heat treatment area into a very small space, making heating, cooling, evaporation, crystallisation and drying operations very thermally efficient and also economical.

In the food sector, we highlight the possibility of controlling the scale, which has a dramatic effect on the quality of the products. This machine thus reproduces the cooking conditions of non-industrial cooking, i.e. it maintains the area/volume ratio of traditional cooking utensils.

Another of the particularities is that in some cases it is not necessary for it to be fed by a pump, either when loading or removing the product.

Within the field of continuous processes, it can work closed or by gravity.

Said machine continually stirs the product to be treated, forcing it to pass over thermally conditioned walls, thus raising or lowering the temperature of the product, as applicable, and consequently processing it.

Suitable foods for thermal treatment include e.g. fruit, vegetables, pulses, rice, soup, meat, etc. Products other than foods can also be processed.

### BACKGROUND OF THE INVENTION

The known Spanish utility model ES-U-0291930 relates to a continuous refrigeration or heating device for fluid or paste products. This device consist of three concentric receptacles closed at one of their ends and open at the opposite, a rotary disc being position in the open part wherefrom multiple arms emerge to which the scraper blades of the walls are attached.

A refrigeration or heating fluid is situated between the walls of the three receptacles to thermally condition the fluid or paste placed therein. The product enters and leaves the machine on the face to which the three receptacles are joined and flows from the inner tank to its outlet via the outer tank.

The difficulty of said equipment lies, on the one hand, in the fact that the chambers through which the product passes do not have the same dimensions or capacity, so the time that the product remains therein is variable, making it difficult to calculate the heating or cooling thereof. The capacity of the equipment is quite limited, as it increases proportionally to the diameter of the equipment, so the dimensions of a tank can be large.

As the scraper blades wear down, the product remains stuck to the walls of the receptacle, thereby impeding the thermal transfer and therefore the cooking and/or cooling of the product, fouling it very easily.

### DESCRIPTION OF THE INVENTION

The object of the present invention relates to a scraped surface heat exchanger for treating foods and other products that overcomes the aforementioned problems in the state of the art.

Firstly, it must be stated that said machine serves to both heat and cool products. Due to the way it is designed, it serves as a product dehydrating machine as it can manage to completely remove moisture therefrom, and it can also serve as a toaster, because once dehydrated it can continue to heat the product, thus toasting it.

The treatment machine of the invention consists of a casing, on the side of which there is a service inlet and outlet, through which the fluid that heats or cools the internal walls of the machine flows. It is also important to mention the product inlet and outlets, both the overflow and the gravity outlet at the top and bottom of the machine, respectively, which are positioned on the opposite side to the product inlet in order to ensure that the product to be treated passes throughout the entire machine.

In any case, the arrangement and number of product and service inlets/outlets may vary according to the application.

The gear motor is situated externally and positioned at the output thereof is the shaft that passes through the machine, which carries the rotary blades that mix the product. This motor may or may not include a variable speed device that makes it possible to simply and effectively control the speed of rotation of the shaft and therefore the blades, thus adapting to the product to be treated, whether by heating or cooling.

Depending on the version, the drive mechanism may vary, and in some cases it can be a servo motor, a hydraulic motor or any other device that exists on the market.

The inside of the casing is divided into compartments by the inclusion of thermally conditioned walls, which do not reach the bottom, thereby leaving a free space for the product to pass through at the bottom of the machine, this passage being interrupted by the action of the rotary blades that mix the product.

Depending on the application, these walls may be positioned so that they alternately close off the passage, causing the product to flow up/down.

The thermally conditioned walls are generally hollow so that a eutectic fluid or liquid can flow through the inside thereof to transfer cold or heat to the inside of the machine. This fluid comes from the service inlet and leaves through the collector that flows into the service outlet. The walls can also be solid, receiving heat or cold directly by transfer from heater or cooler elements that are situated inside said walls.

Situated between the thermally conditioned walls are the rotary blades that collect the product from the bottom of the casing and carry it by dragging it between two thermally conditioned walls, thereby heating or cooling the product / food as it comes into contact with the walls. To prevent the product from sticking to the walls, the blades constantly scrape the thermally conditioned walls by means of an ingenious system of scraper devices attached to a central arm of each blade by supports that project from the arm of the blade, and springs are installed as a pressure element of the scraper pieces to maintain the constant pressure of the scraper pieces. These springs can be conventional springs or a shock-absorber product such as tubes made from silicone or a similar shock-absorbing material. The scraper devices can also be fixed without shock absorbers in applications where the rotational action of the scraper blades in contact with the product is sufficient to scrape the thermally conditioned walls.

The greater the number of thermally conditioned walls and therefore the number of blades situated therebetween, the greater the machine's capacity and therefore the higher the level of production, this being a matter of simply increasing the length or diameter of the machine.

The product treatment process can be a continuous process consisting of
- continuously feeding the product into the closed vessel
- continually rotating the blade-carrying shaft
- the blades dragging the product so that it successively comes into contact with the thermally conditioned walls
- removing the overflow of the product through an outlet positioned on the opposite side to the product inlet once treated, or using a pump at the bottom of the unit

The product treatment process can also be intermittent, consisting in this case of
- continuously feeding the product into the closed vessel
- continually rotating the blade-carrying shaft
- the blades dragging the product so that it successively comes into contact with the thermally conditioned walls for a pre-established time
- removing the treated product by gravity or using a pressurised gas

Once the product has been thermally treated and removed from the machine, it can be cooled before being subjected to a packaging step or being directly destined for consumption or disposal, as applicable.

It must be mentioned that for processes known in the food industry as aseptic, this unit can sterilise, keeping the products with or without particles for the pre-established time, and can cool in the same unit before then going on to the sterile filling step, unloading the unit using a pump or pressurised gas. If the process is to be intermittent, one unit is required, and if the process is to be continuous, two or more units will be required with all their aseptic processing accessories, as applicable. The advantage of this invention in this particular process is that the maintenance pipe ensuring product sterility is not needed, especially for products with particles or solids such as fruit, vegetables, pulses, soups, ready-prepared food, etc.

The machine can work continuously or intermittently. Depending on the application, the unit can be pressurised to work under pressure on the product side.

### BRIEF DESCRIPTION OF THE DRAWINGS

To complement this description and in order to aid a better understanding of the invention's characteristics, there is a set of illustrative and non-limiting drawings integral to said description, which are as follows:
- Figure 1: shows a front view of the treatment machine of the invention together with a cross-sectional view showing the inside thereof.
- Figure 2: is a cross-sectional perspective view of the machine of the invention.
- Figure 3: is a perspective view of the shaft that carries the scraper blades and the gear motor that drives them
- Figure 4: is a detailed cross-sectional view of an assembled blade
- Figure 5: shows an exploded view of the elements that make up one of the blades.

### DESCRIPTION OF A PREFERRED EMBODIMENT OF THE INVENTION

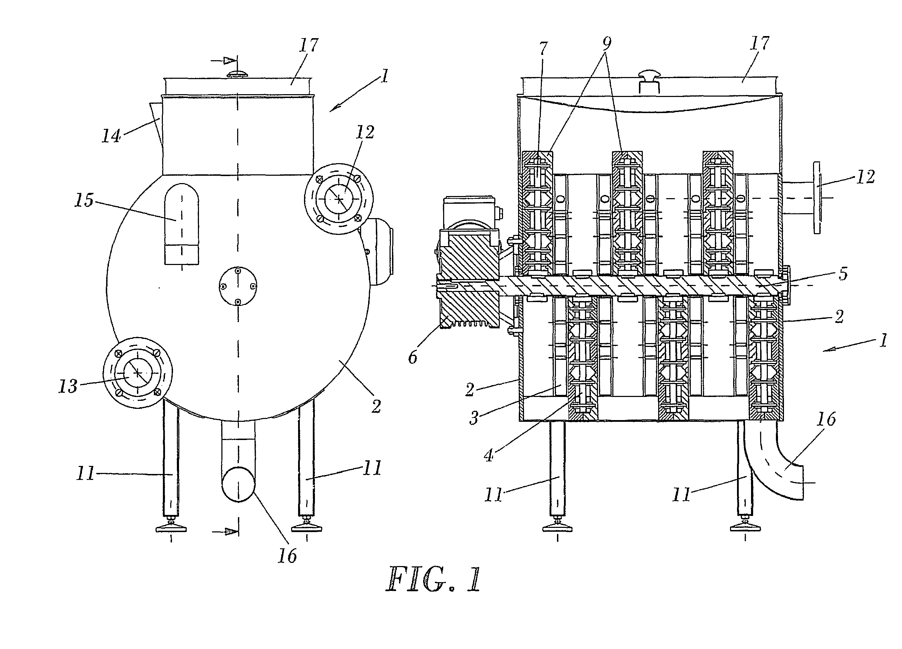

Figure 1 shows the treatment machine (1) of the invention, consisting of a casing (2) resting on support legs (11), although it can be secured to a bedplate or similar structure. The side view shows the service inlet (12) and service outlet (13), through which the heat-transfer fluid that heats or cools the inner walls of the machine flows, which will be discussed below. Also there is the product inlet (14) and the product outlets, both the overflow (15) and the gravity outlet (16), which are positioned at the top and bottom of the machine, respectively, and also positioned on the opposite side to the product inlet.

It can be observed that the gear motor (6) is external, and situated at the output thereof is the shaft (5) that passes through the machine, which carries the rotary blades (4). This motor may or may not include a variable speed device that makes it possible to simply and effectively control the speed of rotation of the shaft (5) and therefore the blade (4), thus adapting to the product to be processed, whether by heating and/or cooling.

The inside of the casing (2) is divided into compartments by the inclusion of thermally conditioned walls (3), which do not reach the bottom, thereby leaving a free space for the product to pass through at the bottom of the machine, this passage being interrupted by the action of the rotary blades (4), which in turn thoroughly mix the product.

The thermally conditioned walls (3) are generally hollow so that a eutectic fluid or liquid can flow through the inside thereof to transfer cold or heat to the inside of the machine. This fluid comes from the service inlet (12) and leaves through the collector that flows into the service outlet (13). If used for heating, the fluid can be water, steam, etc., and for cooling, brine, glycol or direct expansion of gas, ammoniac, etc. can be used.

Situated between the thermally conditioned walls (3) are the rotary blades (4) that collect the product from the bottom of the casing and carry it by dragging it between two thermally conditioned walls, thereby heating or cooling it as it comes into contact with the walls. To prevent the product from sticking to the walls, the blades constantly scrape the thermally conditioned walls by means of an ingenious system that will be explained in more detail with reference to the subsequent figures.

The machine can work continuously, for which the product will be fed into the inlet (14), filling the inside of the machine until it overflows through the top outlet (15), making this a continuous process with a product overflow outlet, or it can be an intermittent process wherein the machine is filled, left to act for a suitable length of time and finally the product is removed through the gravity outlet (16).

At the top of the treatment machine (1) there is a manhole (17) for letting out the cooking steam if the machine is used for frying or evaporating, or is operating under pressure. It can also be used to control the inside of the treatment machine, for the cleaning thereof, etc.

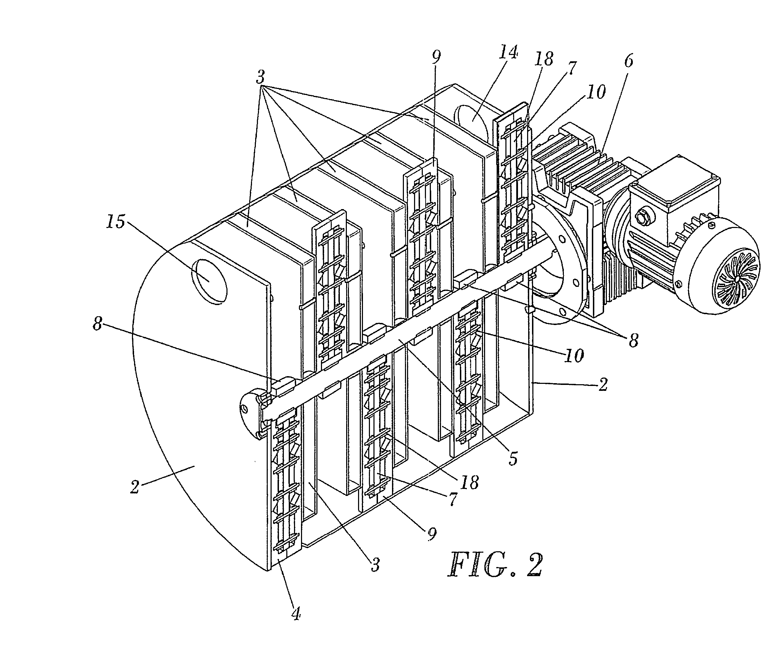

Figure 2 shows a cross-sectional perspective view where the main elements of the treatment machine can perhaps be observed in more detail and how the rotary blades (4) are situated between the thermally conditioned walls (3), which in turn mix the product. These thermally conditioned walls leave the bottom free for the product to pass therethrough, interrupted only by the passing of the rotary blades (4). In this figure only one blade can be observed for each space between the thermally conditioned walls, but this does not mean that there cannot be more than one blade between the walls, thereby increasing the effectiveness as the product is forced to pass over the thermally conditioned walls more times. Numbers (14) and (15) represent the product inlet and outlet of the treatment machine, which are positioned on opposite sides so that the product must pass all the way around it when the process is continuous, the product overflowing from the outlet.

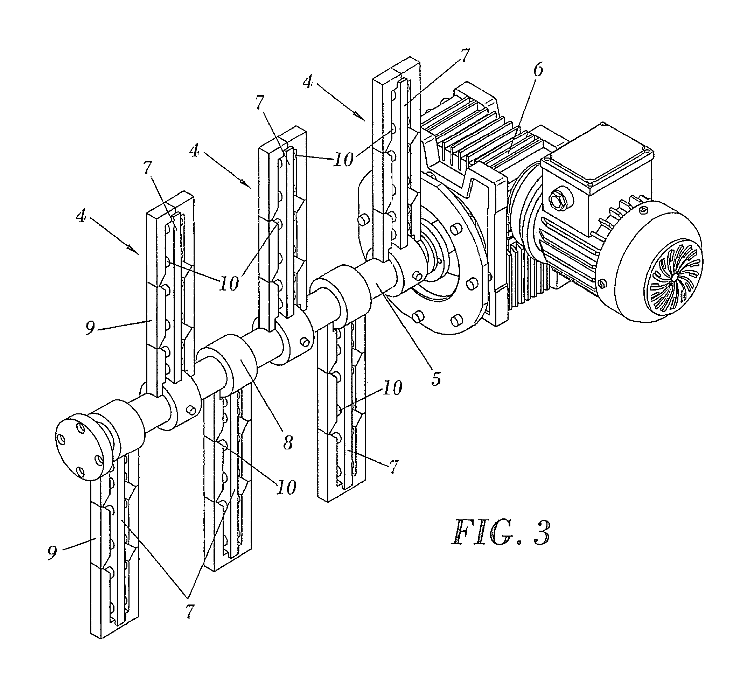

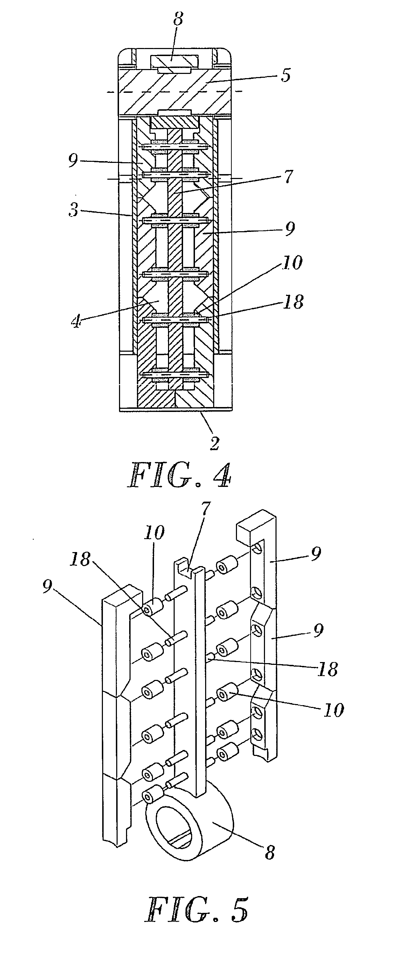

Figure 3 shows a perspective view of the drive shaft (5) that carries the rotary blades (4) and the gear motor (6) that drives them. As regards these blades (4), they are made up of several sections with scraper devices (9) that come into contact with the thermally conditioned walls, thus ensuring maximum contact with the walls. In figure 5 it can be observed how the arm (7) of the blades (4) is keyed or connected to the drive shaft (5) by means of the blade support (8).

This connection can be made by other methods depending on the requirements of the application, hygiene, etc. A set of supports are joined to the arms (7) to which the scraper devices (9) are connected with intermediate shock-absorber elements (10) that can be tubes made from silicone or a similar shock-absorbing material, which press the scraper devices against the thermally conditioned walls. This structure ensures the maximum contact between the blades and the thermally conditioned walls, thus preventing product leakages in the contact area therebetween.

Figure 4 is a detailed cross-sectional view of an assembled blade and how it reaches the base of the casing (2), forcing the product to enter the space between the thermally conditioned walls.

## Claims

1. Machine for treating foods and fluids in general consisting of a casing wherein the food is treated, the inside of said casing comprising:
- at least two thermally conditioned walls
- at least one blade that fits tightly and moves between the walls

2. Machine for treating foods and fluids in general according to claim 1, **characterised in that** it has multiple thermally conditioned walls that are parallel to one another, between which the corresponding blades move.

3. Machine for treating foods and fluids in general according to claims 1 and 2, **characterised in that** the thermally conditioned walls do not reach the bottom of the closed vessel, defining a free space through which the product can pass and a corresponding product accumulation area between the bottom of the walls and the base of the closed receptacle, except in applications that require an alternate closure of the walls with the base for an up and down zigzag circulation.

4. Machine for treating foods and fluids in general according to claims 1 and 2, **characterised in that** the blade or blades that move between the thermally conditioned walls are attached to a shaft that receives the movement of a motor or other drive mechanism depending on the case, e.g. a servo motor, hydraulic motor, etc.

5. Machine for treating foods and fluids in general according to claim 4, **characterised in that** the motor includes a speed reducer if a gear motor is used.

6. Machine for treating foods and suchlike according to claim 4, **characterised in that** the motor includes a variable speed device if a gear motor is used.

7. Machine for treating foods and fluids in general according to claims 1 to 3, **characterised in that** the thermally conditioned walls are hollow and the heat-transfer fluid is situated therein.

8. Machine for treating foods and fluids in general according to claims 1 to 3, **characterised in that** the thermally conditioned walls are solid.

9. Machine for treating foods and fluids in general according to claims 1 and 7, **characterised in that** the heat-transfer fluid is steam.

10. Machine for treating foods and fluids in general according to claims 1 and 7, **characterised in that** the heat-transfer fluid is a eutectic liquid.

11. Machine for treating foods and fluids in general according to claim 1, **characterised in that** the blade or blades have
- An arm that is immovably attached to the shaft that transmits the movement from the motor
- At least one support connected to the arm
- At least one contact piece with the thermally conditioned walls
- A shock-absorber element between the scraper device for contact with the thermally conditioned walls and the arm that transmits the movement from the motor. Except for versions wherein the scraper is fixed without a shock absorber.

12. Machine for treating foods and fluids in general according to claim 11, **characterised in that** the side of each blade includes one or more independent pieces for contact with the thermally conditioned walls that ensure the maximum surface contact thereof.

13. Machine for treating foods and fluids in general according to claim 11, **characterised in that** the shock-absorber elements are tubular and are concentric with the supports connected to the scraper devices when they have shock absorbers.

14. Machine for treating foods and fluids in general according to claims 11 and 13, **characterised in that** the shock-absorber elements are tubes made from silicone or a similar elastic material in the version with shock absorbers.

15. Machine for treating foods and fluids in general according to claims 11 and 13, **characterised in that** the shock-absorber elements are helicoidal springs in the version with shock absorbers.

16. Continuous product treatment process consisting of
- continuously feeding the product into the closed vessel
- continually rotating the blade-carrying shaft
- the blades dragging the product so that it successively comes into contact with the thermally conditioned walls
- removing the product that overflows through an outlet positioned on the opposite side to the product inlet once treated.

17. Product treatment process consisting of
- continuously feeding the product into the closed vessel
- continually rotating the blade-carrying shaft
- the blades dragging the product so that it successively comes into contact with the thermally conditioned walls for a pre-established time
- removing the treated product.

18. Product treatment process according to claims 16 or 17, **characterised in that** the product is cooled once it has been removed.

19. Product treatment process according to claims 16 or 17, **characterised in that** the product is directly consumed once it has been removed.

20. Product treatment process according to claims 16 or 17, **characterised in that** the product is packaged once it has been removed.

21. Product treatment process according to claims 16 or 17, **characterised in that** the thermal processing is carried out by heating the product.

22. Product treatment process according to claims 16 or 17, **characterised in that** the thermal processing is carried out by cooling the product.

23. Product treatment process according to claims 16 or 17 and 21 and 22, **characterised in that** the product is heated, kept in the unit and cooled for refrigerated filling.

24. Product treatment process according to claims 16 or 17 and 21 and 22, **characterised in that** the product is heated, kept in the unit and cooled for aseptic filling.

25. Product treatment process according to claims 16 or 17 and 22, **characterised in that** the heating of the product results in the dehydration thereof.

26. Product treatment process according to claim 23, **characterised in that** the product is toasted.

27. Product treatment process according to claims 16 to 26, **characterised in that** it can perform evaporation to dehydration processes without stopping, as the blades ensure the absence of fouling deposits on the walls.

28. Process for treating foods and fluids in general, according to claims 16 to 27, **characterised in that** the food or fluid is treated at atmospheric pressure.

29. Process for treating foods and fluids in general, according to claims 16 to 27, **characterised in that** the food or fluid is treated under pressure.
